# EUROPEAN PATENT APPLICATION

(11) **EP 1 918 006 A1**
(43) Date of publication of application: **07.05.2008**
(21) Application number: 07119684.4
(22) Date of filing: 30.10.2007
(51) Int. Cl.: B01D 29/11, B01D 29/50, B01D 35/30

(54) **Combination filter for a lubrication system**

(30) Priority: 31.10.2006 US 590358
(71) Applicant: Honeywell International, Inc., Morristown, New Jersey 07962 (US)
(72) Inventor: Frost, Christopher, Scottsdale, AZ 85258 (US)
(74) Representative: Buckley, Guy Julian

(57) **Abstract**

A combination filter includes a filter housing (104) having first and second inlet ports (122,126) and first and second outlet ports (124,128). A first filter bowl (110) is coupled to the housing. The first filter bowl inner surface defines a first cavity that is in fluid communication with the first inlet port and the first outlet port. A second filter bowl (112) is coupled to the housing and is at least partially disposed within the first cavity of the first filter bowl (110). The second filter bowl (112) defines a second cavity that is in fluid communication with the second inlet port (126) and the second outlet port (128). A first filter (106) is disposed within the first filter bowl (110) for filtering fluid that flows between the first inlet port (122) and the first outlet port (124), and a second filter (108) is disposed within the second filter bowl (112) for filtering fluid that flows between the second inlet (126) and outlet (128) ports.

## Description

### FIELD OF THE INVENTION

The present invention generally relates to a filter for a lubrication system, and more particularly relates to a combination filter for a lubrication system having a coarse filter and a fine filter.

### BACKGROUND OF THE INVENTION

Lubrication systems for aircraft engines such as an auxiliary power unit (APU) generally include a coarse screen filter in an oil scavenge passage between a gearbox mounted generator and a lubrication pump. A second, fine screen filter is included between the lubrication pump and the components to be lubricated in the gearbox. The coarse screen filter is intended to collect relatively large pieces of debris that can result from generator wear or failure. If the relatively large pieces of debris are allowed to reach the lubrication pump, significant damage to the rotating pump elements can occur. This can result in a failure of the APU. Generally, the APU should be able to continue to operate after a generator failure, and if the pump elements continue to pump, the APU typically can continue to operate after a generator failure. Moreover, the coarse screen filter is typically a small screen such as a witches hat installed directly in the oil passage. This configuration typically requires an access point in the oil passage to allow for filter installation and removal. Moreover, because the screens are relatively small, they can plug up quickly. If the coarse screen filter plugs, the resulting backpressure can lead to further undesirable consequences.

One method that has been proposed for reducing backpressure is to increase the coarse screen filter flow area. This solution, however, exhibits its own drawbacks. For example, increasing the surface area of the coarse screen filter may require a larger filter in a separate housing. This solution may add cost, weight, complexity, and spatial volume to the gearbox.

Accordingly, it is desirable to increase the surface area of the coarse screen filter without adding significant weight, costs, complexities, or spatial volume to the gearbox. Furthermore, other desirable features and characteristics of the present invention will become apparent from the subsequent detailed description of the invention and the appended claims, taken in conjunction with the accompanying drawings and this background of the invention.

### BRIEF SUMMARY OF THE INVENTION

A combination filter is provided. The combination filter includes a filter housing having first and second inlet ports and first and second outlet ports; a first filter bowl coupled to the housing, the first filter bowl having at least an inner surface and an outer surface, the first filter bowl inner surface defining a first cavity that is in fluid communication with the first inlet port and the first outlet port; a second filter bowl coupled to the housing and at least partially disposed within the first cavity of the first filter bowl, the second filter bowl having at least an inner surface and an outer surface, the second filter bowl inner surface defining a second cavity that is in fluid communication with the second inlet port and the second outlet port, the second filter bowl outer surface defining a barrier that fluidly isolates the first inlet port and the first outlet port from the second inlet port and the second outlet port; a first filter disposed within the first filter bowl for filtering fluid that flows between the first inlet port and the first outlet port; and a second filter disposed within the second filter bowl for filtering fluid that flows between the second inlet port and the second outlet port.

A lubrication system for an auxiliary power unit includes a clutch, an engine, a lubrication fluid sump for receiving scavenged lubrication fluid from components in the clutch and engine, a generator, a lubrication fluid pump, and a combination filter. The combination filter includes a filter housing having first and second inlet ports and first and second outlet ports; a first filter bowl coupled to the housing, the first filter bowl having at least an inner surface and an outer surface, the first filter bowl inner surface defining a first cavity that is in fluid communication with the first inlet port and the first outlet port; a second filter bowl coupled to the housing and at least partially disposed within the first cavity of the first filter bowl, the second filter bowl having at least an inner surface and an outer surface, the second filter bowl inner surface defining a second cavity that is in fluid communication with the second inlet port and the second outlet port, the second filter bowl outer surface defining a barrier that fluidly isolates the first inlet port and the first outlet port from the second inlet port and the second outlet port; a first filter disposed within the first filter bowl for filtering fluid that flows between the first inlet port and the first outlet port; and a second filter disposed within the second filter bowl for filtering fluid that flows between the second inlet port and the second outlet port.

A method of manufacturing a combination filter is provided. The method includes providing a filter housing having first and second inlet ports and first and second outlet ports; coupling a first filter bowl to the housing, the first filter bowl having at least an inner surface and an outer surface, the first filter bowl inner surface defining a first cavity that is in fluid communication with the first inlet port and the first outlet port; coupling a second filter bowl to the housing and at least partially disposed within the first cavity of the first filter bowl, the second filter bowl having at least an inner surface and an outer surface, the second filter bowl inner surface defining a second cavity that is in fluid communication with the second inlet port and the second outlet port, the second filter bowl outer surface defining a barrier that fluidly isolates the first inlet port and the first outlet port from the second inlet port and the second outlet port; providing a first filter within the first filter bowl for filtering fluid that flows between the first inlet port and the first outlet port; and providing a second filter within the second filter bowl for filtering fluid that flows between the second inlet port and the second outlet port.

### BRIEF DESCRIPTION OF THE DRAWINGS

The present invention will hereinafter be described in conjunction with the following drawing figures, wherein like numerals denote like elements, and

FIG. 1 is a cross sectional view of an exemplary embodiment of the combination filter of the present invention; and

FIG. 2 is a schematic view of a lubrication system including the combination filter shown in FIG. 1.

### DETAILED DESCRIPTION OF THE INVENTION

The following detailed description of the invention is merely exemplary in nature and is not intended to limit the invention or the application and uses of the invention. Furthermore, there is no intention to be bound by any theory presented in the preceding background of the invention or the following detailed description of the invention.

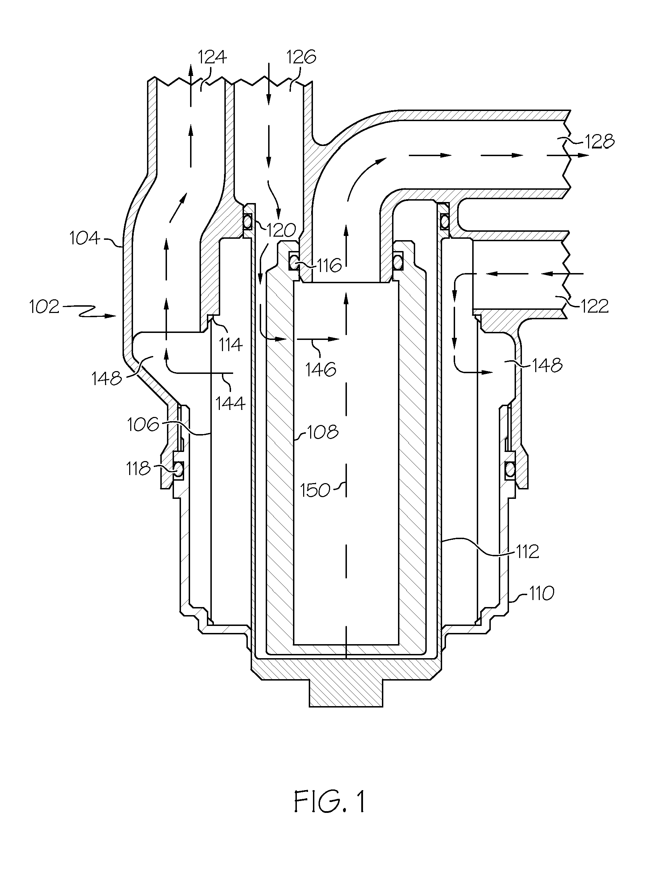

Referring to FIG. 1, an exemplary embodiment of the combination filter 102 includes a housing 104, a first filter 106, and a second filter 108. The housing 104 includes a first inlet port 122, a second inlet port 126, a first outlet port 124, and a second outlet port 128. The housing 104 is selectively attachable to the first filter 106 and the second filter 108 at coupling 114 and coupling 116, respectively. In one embodiment, the first filter 106 is a coarse filter and the second filter 108 is a fine filter. The central longitudinal axis of both the first filter 106 and the second filter 108 can correspond to a center axis 150 of the combination filter 102. In other words, the first and second filters 106, 108 can be generally centered within the combination filter 102.

A first filter bowl 110 is selectively attachable to the housing 104 at coupling 118. The first filter bowl 110 defines a cavity for enclosing the first filter 106. The cavity of the first filter bowl 110 is in fluid communication with the first inlet port 122 and the first outlet port 124. A second filter bowl 112 is selectively attachable to the housing 104. In one embodiment, the second filter bowl 112 can be attached to the first filter bowl 110 to couple the second filter bowl 112 to the housing 104 at seal 120. The second filter bowl 112 includes an inner surface defining a cavity to enclose the second filter 108. The cavity of the second filter bowl 112 is in fluid communication with the second inlet port 126 and the second outlet port 128. The second filter bowl 112 further includes an outer surface that defines a barrier that fluidly isolates the first inlet port 122 and the first outlet port 124 from the second inlet port 126 and the second outlet port 128 to thus maintain a fluid isolation between the first filter 106 and the second filter 108. In an alternate embodiment, the first and second filter bowls 110, 112 can be machined into one piece to define two cavities and to respectively fluidly isolate the first filter 106 and the second filter 108. Generally, debris filtered by the first filter 106 remains in the first filter 106 or the first filter bowl 110, and debris filtered by the second filter 108 remains in the second filter 108 or the second filter bowl 112.

The first and second filters 106, 108 can be cylindrically shaped, and the first filter 106 can surround the second filter 108. Other shapes of the first and second filters 106, 108 and the first and second filter bowls 110, 112 are possible. Similarly, the first filter bowl 110 and the second filter bowl 112 are cylindrically shaped, and the first filter bowl 110 can at least partially surround the second filter bowl 112. Other shapes of the first and second filters 106, 108 and the first and second filter bowls 110, 112 are possible. The diameter of the second filter 108 can be slightly larger than the diameter of the second outlet port 128.

The first and second filters 106, 108 can be replaced or cleaned by uncoupling the filters 106, 108 at couplings 114, 116. The first and second filters 106, 108 are generally self-supporting, although support structures can accompany a filtering material that makes up the first and second filters 106, 108. Coupling 114 can be a notch in the housing 104 that maintains the position of the first filter 106. Coupling 116 can be an O-ring seal that forms a friction fit between the second filter 108 and the housing 104. In one embodiment, the coupling 118 between the first filter bowl 110 and the housing 104 is an O-ring seal and additionally includes threaded portions to screw the first filter bowl 110 to the housing 104. The coupling 118 can be on the interior surface of the housing 104 facing the central axis 150 of the combination filter 102 and on the exterior surface of the first filter bowl filter 110 facing away from the central axis 150 of the combination filter 102. The first filter bowl 110 can extend beyond the coupling 118 such that the first filter bowl 110 and the housing 104 overlap. The coupling 120 between the second filter bowl 112 and the housing 104 can be on a surface of the second filter bowl 112 facing away from the central axis 150 of the combination filter 102 and on a surface of the housing 104 facing the central axis 150 of the combination filter 102. The coupling 120 can be an O-ring seal that extends circumferentially from adjacent the second inlet port 126 to a portion of the housing 104 between the first inlet port 122 and the second outlet port 128. As noted above, the second filter bowl 112 can be additionally supported by its connection with the first filter bowl 110. The coupling 116 between the second filter 108 and the housing 104 can be on a surface of the housing 104 facing away from the central axis 150 of the combination filter 102 and on a surface of the second filter 108 facing the central axis 150 of the combination filter 102. The coupling 116 generally circumscribes the second outlet port 128 with at least a portion of the coupling 116 adjacent the second inlet port 126.

In one embodiment, the first inlet port 122 is generally perpendicular to the central axis 150 of the combination filter 102, and the first outlet port 124 is generally parallel to the central axis 150 of the combination filter 102. The second inlet port 126 can be generally parallel to the central axis 150 of the combination filter 102, and the second outlet port 128 can extend parallel to the central axis 150 of the combination filter 102 and then bend 90° to be perpendicular to the central axis 150.

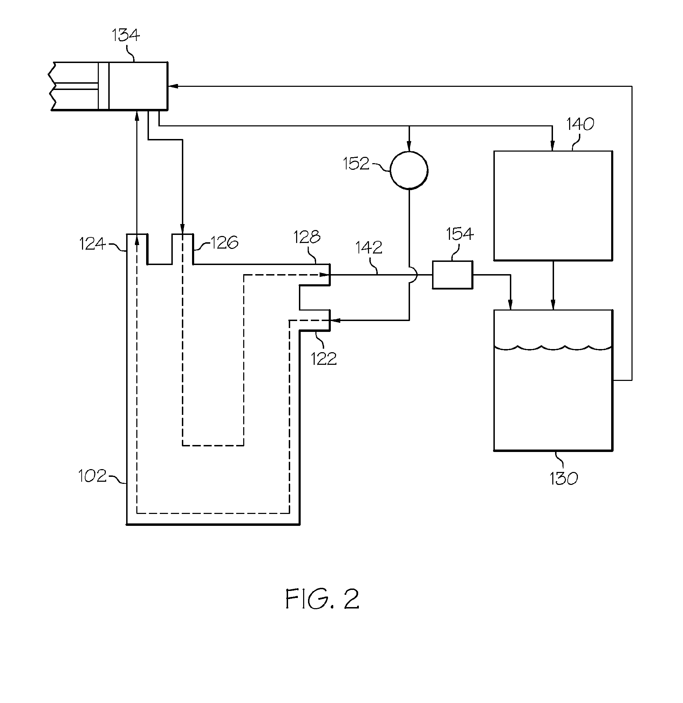

Further details of the combination filter 102, including the operation of the combination filter 102 within a lubrication system 100 is described with reference to FIG. 1 and additionally with reference to FIG. 2.

The lubrication system 100 includes a lubrication fluid sump 130 that scavenges lubrication fluid from a gearbox 154 and an engine 140. The lubrication fluid sump 130 includes a conduit that is coupled to a lubrication fluid pump 134. The lubrication fluid pump 124 pumps the lubrication fluid to a generator 152 and the engine 140. The lubrication fluid that flows through the generator 152 then flows to the first inlet port 122 in the housing 104 of the combination filter 102. The first inlet port 122 is in fluid communication with the first filter 106, and the first filter 106 filters the lubrication fluid from the generator 152. As shown by path 144 of FIG. 1, the lubrication fluid is passed outwardly through the first filter 106. The lubrication fluid from the generator 152 can contain relatively large pieces of debris that are filtered out by the first filter 106.

From the first filter 106, the lubrication fluid that has undergone initial filtration flows circumferentially between the first filter 106 and the first filter bowl 110 to the first outlet port 124 in the housing 104. The housing 104 can define an annular passage 148 to accommodate the lubrication fluid passing through the first filter 108 and transitioning to the first outlet port 124. The lubrication fluid flows out of the first outlet port 124 to a lube pump inlet conduit and subsequently to the lubrication fluid pump 134.

The lubrication fluid flows through the lubrication fluid pump 134 and back to the combination filter 102. The lubrication fluid enters the combination filter 102 from the lubrication fluid pump 134 at the second inlet port 126 in the housing 104. The second inlet port 126 is in fluid communication with the second filter 108. The lubrication fluid is filtered by the second filter 108 to filter out relatively fine particles of debris. As shown by path 146 of FIG. 1, the lubrication fluid is passed inwardly through the second filter 108. The lubrication fluid then flows circumferentially between the second filter bowl 112 and the second filter 108 to a second outlet port 128 in the housing 104. The lubrication fluid exits the combination filter 102 via the second outlet port 128.

The lubrication fluid then flows to a clutch in the gearbox 154. The lubrication fluid, which is now at its cleanest after being filtered by the first filter 106 and the second filter 108, lubricates the components within the clutch in the gearbox 154. Once the lubrication fluid has lubricated the components of the clutch in the gearbox 154, the lubrication fluid flows back to the lubrication fluid sump 130, which completes the circuit of the lubrication system 100.

The first filter 106 can include a wire mesh or metal screen. The first filter 106 can be a metal tube, for example aluminum, with laser drilled holes. The second filter 108 is preferably a corrugated, mesh, fiber or paper filter and adapted to provide removal of fine particulate material that could prove harmful to the clutch in the gearbox 154. In one embodiment, the pore size of the first filter 106 can be about 700 to 1000 microns, and the pore size of the second filter can be 3 to 5 microns. The position of second filter 108 on the downstream side of the lubrication fluid pump 134 also serves to capture materials that may enter the system due to deterioration of components of the lubrication fluid pump 134. As a result, potential damage to downstream system components is minimized.

By first filtering the lubrication fluid with the first filter 106, the combination filter 102 prevents the second filter 108 from being clogged with relatively large pieces of debris and prolongs the life of the second filter 108 and prevents debris from damaging the lubrication fluid pump 134. Furthermore, since the first filter 106 surrounds the second filter 108, a relatively larger filter surface area can be provided. Moreover, the first filter 106 can be easier to remove and clean than the second filter 108.

In one embodiment of the present invention, both the first filter 106 and the second filter 108 are packaged into the same filter housing 104 and within the larger, first filter bowl 110. This results in lower machine and fabrication costs, maintenance, and weight. Moreover, the first filter 106 has a larger filtering surface area as compared to conventional filters because of the cylindrical shape, as well as having the first filter 106 located outside of the smaller, second filter 108.

The combination filter 102 can further include a bracket (not shown) for mounting the combination filter 102 in an engine, for example, an auxiliary power unit (APU). Alternately, the combination filter 102 can be combined integrally with the gearbox 154 or the lubrication fluid pump 134.

In alternate embodiments, the lubrication fluid can flow in opposite directions as that shown in FIG. 1. For example, the lubrication fluid can flow into the combination filter 102 at port 124, flow inwardly through the first filter 106, and exit the combination filter 102 at port 122. Similarly, the lubrication fluid can flow into the combination filter 102 at port 128, flow outwardly through the second filter 108, and exit the combination filter 102 at port 126. In another embodiment, the positions of the first and second filters 106, 108 can be reversed.

While at least one exemplary embodiment has been presented in the foregoing detailed description of the invention, it should be appreciated that a vast number of variations exist. It should also be appreciated that the exemplary embodiment or exemplary embodiments are only examples, and are not intended to limit the scope, applicability, or configuration of the invention in any way. Rather, the foregoing detailed description will provide those skilled in the art with a convenient road map for implementing an exemplary embodiment of the invention. It being understood that various changes may be made in the function and arrangement of elements described in an exemplary embodiment without departing from the scope of the invention as set forth in the appended claims.

## Claims

1. A combination filter (102), comprising:
a filter housing (104) having first and second inlet ports (122, 126) and first and second outlet ports (124, 128);
a first filter bowl (110) coupled to the housing (104), the first filter bowl (110) having at least an inner surface and an outer surface, the first filter bowl inner surface defining a first cavity that is in fluid communication with the first inlet port and the first outlet port;
a second filter bowl (112) coupled to the housing (104) and at least partially disposed within the first cavity of the first filter bowl (110), the second filter bowl (112) having at least an inner surface and an outer surface, the second filter bowl inner surface defining a second cavity that is in fluid communication with the second inlet port (126) and the second outlet port (128), the second filter bowl outer surface defining a barrier that fluidly isolates the first inlet port (122) and the first outlet port (124) from the second inlet port (126) and the second outlet port (128);
a first filter (106) disposed within the first filter bowl (110) for filtering fluid that flows between the first inlet port (122) and the first outlet port (124); and
a second filter (108) disposed within the second filter bowl (112) for filtering fluid that flows between the second inlet port (126) and the second outlet port (128).

2. The combination filter (102) of claim 1, wherein the first and second filters (106, 108) are cylindrical

3. The combination filter (102) of claim 2, wherein the first filter (106) surrounds the second filter (108).

4. The combination filter (102) of claim 1, wherein the first filter (106) includes a coarse filter material and the second filter (108) includes a fine filter material.

5. The combination filter (102) of claim 1, wherein the first and second filters (106, 108) are coupled to the housing (104).

6. The combination filter (102) of claim 1, wherein the combination filter (102) includes a central longitudinal axis (150), the first inlet port (122) and the first outlet port (124) being configured such that the lubrication fluid flows outwardly through the first filter (106), away from the central longitudinal axis (150).

7. The combination filter (102) of claim 1, wherein the combination filter (102) includes a central longitudinal axis (150), the second inlet port (126) and the second outlet port (128) being configured such that the lubrication fluid flows inwardly through the second filter (108), toward the central longitudinal axis (150).

8. The combination filter (102) of claim 1, wherein the first filter (106) includes a filter material with a pore size of about 700 microns to about 1000 microns.

9. The combination filter (102) of claim 1, wherein the second filter (108) includes a filter material with a pore size of about 3 microns to about 5 microns.

10. The combination filter (102) of claim 1, wherein the first filter (106) and the second filter (108) are releasably attached to the housing (104).
